Europäisches Patentamt

European Patent Office

Office européen des brevets

(19)

(11) Veröffentlichungsnummer : **0 114 240
B1**

(12) **EUROPÄISCHE PATENTSCHRIFT**

(45) Veröffentlichungstag der Patentschrift :
29.07.87

(51) Int. Cl.⁴ : **F 24 J   2/52**

(21) Anmeldenummer : **83111573.8**

(22) Anmeldetag : **19.11.83**

(54) **Nachführungseinrichtung.**

(30) Priorität : **14.01.83 DE 3301046
07.05.83 DE 3316731
26.07.83 DE 3326815**

(43) Veröffentlichungstag der Anmeldung :
**01.08.84 Patentblatt 84/31**

(45) Bekanntmachung des Hinweises auf die Patenterteilung : **29.07.87 Patentblatt 87/31**

(84) Benannte Vertragsstaaten :
**AT CH DE FR GB IT LI NL SE**

(56) Entgegenhaltungen :
**DE-A- 2 738 665
FR-A- 2 446 931
FR-A- 2 505 463
US-A- 4 108 019
US-A- 4 109 640
PATENTS ABSTRACTS OF JAPAN, Band 7, Nr. 37 (M-193)(1182), 15. Februar 1983**

(73) Patentinhaber : **Seifert, Dieter, Dr.-Ing.
Siedlungstrasse 12
D-8265 Neuötting (DE)**

(72) Erfinder : **Seifert, Dieter, Dr.-Ing.
Siedlungstrasse 12
D-8265 Neuötting (DE)**

(74) Vertreter : **Schiller, Walter, Dr. et al
Kanzlei München, Neidl-Stippler, Schiller Willibalds-trasse 36-38
D-8000 München 21 (DE)**

## Beschreibung

Die Erfindung betrifft Nachführungseinrichtungen zur genauen oder angenäherten Nachführung von Geräten nach einer bogenformigen Bahn, beispielsweise von solartechnischen Empfängern oder Reflektoren. Zur Vereinfachung der Darstellung werden in folgenden als Geräte meist fotovoltaische Generatoren (Panels) zugrunde gelegt. Die Nachführungseinrichtung ist jedoch prinzipiell für alle Einrichtungen anwendbar, die nach einer bogenförmigen Bahn auszurichten sind. Das sind unter anderem alle weiteren Solareinrichtungen, die der Einstrahlungsrichtung entsprechend ausgerichtet werden sollen, wie zum Beispiel Solarkocher und Heliostaten. Die Nachführungseinrichtung kann auch benutzt werden zum Nachführen von astronomischen Geräten (Teleskopen, Antenne) zum Ausgleich der Erddrehung. Auch im Maschinen- und Gerätebau sind Anwendungsmöglichkeiten gegeben, wenn ein Gerät einem Objekt, das sich auf einer bogenförmigen Bahn bewegt, nachzuführen ist. Beispiele hierfür sind Bearbeitungs-, Montage-, Transport-, Kennzeichnungs- oder Meßgeräte, die auf Objekte wirken, die sich auf einem Kreisbogen bewegen. Es können zum Beispiel Werkzeuge, Werkstücke, Greifer, Füllvorrichtungen oder andere Geräte sich bewegenden Objekten (z. s. Werkstücke, Werkzeuge, Behälter) nachgeführt werden.

Wegen des Aufwandes für die Nachführung werden Solareinrichtungen häufig fest montiert. Die bekannten Nachführeinrichtungen werden vor allem eingesetzt, um strahlungskonzentrierende Systeme der Einstrahlungsrichtung entsprechend auszurichten. Wenn der Generator um eine Achse drehbar ist, die parallel zur Erdachse liegt (parallaktische Montierung), dann kann der Generator durch eine einfache Drehung mit der Winkelgeschwindigkeit von 15°/h dem Sonnenstand nachgeführt werden. Diese Montierung ist auch bei Teleskopen gebräuchlich. Entsprechend der jahreszeitlich unterschiedlichen Bahn der Sonne wird die Neigung des Generators zur Achse in größeren Zeitabständen korrigiert. Diese Nachführung ist einfach in seiner Wirkungsweise, sie verlangt jedoch eine aufwendige Konstruktion, weil die Drehachse entsprechend dem Breitengrad des Aufstellungsortes schräg montiert ist. Bei Solaranlagen wurde deshalb auf eine senkrechte oder waagrechte Lagerung ausgewichen, unter Verzicht auf einen Teil der nutzbaren Energie. Auch die Verwendung von zwei Achsen, eine vertikale Achse und eine horizontale Achse, mit Einzelsteuerung der Bewegungen um die Achsen ist bekannt. Diese Nachführung verlangt aufwendige Maßnahmen zur Kippung um die horizontale Achse. Bei sehr schweren Teleskopen wurde die parallaktische Montierung ebenfalls verlassen und eine Lagerung mit vertikaler und horizontaler Achse verwendet. Für Nachführungen im Maschinen- und Gerätebau sind ähnliche Lösungen bekannt. Bei Robotern mit Einzelsteuerung der Bewegungen um mehrere Achsen ergeben sich Probleme bei schweren nachzuführenden Geräten und bei hohen Genauigkeitsanforderungen, weil die Auslegung für große Tragfähigkeit und hohe Steifigkeit zu aufwendigen Konstruktionen führt.

Es sind mehrere Konstruktionen bekannt, die eine automatische Bewegung des Solargerätes um die zweite Achse bei der Bewegung um die erste Achse erzeugen. Der Aufwand bei den bekannten Getrieben ist sehr groß, wenn eine genaue Ausrichtung angestrebt wird.

Eine Verbesserung gegenüber der nur azimutalen Ausrichtung kann in einfacher Weise erzielt werden, wenn ein Getriebeglied für eine Zunahme der Neigung des Solargerätes sorgt, sobald es aus der Mittagsstellung bewegt wird. In der FR-A-2 505 463 ist der Solarempfänger auf einer horizontalen Achse gelagert, die wiederum um eine vertikale Achse drehbar ist. Die horizontale Achse ist gegenüber der vertikalen achse versetzt. Eine angenäherte Nachführung soll durch ein Führungsglied bewirkt werden, das einerseits mit dem nachzuführenden Gerät und andererseits mit einem Gelenkpunkt vor der horizontalen Achse verbunden ist. Bei der Drehung der vertikalen Achse aus der Mittagsstellung heraus wird die Neigung des Gerätes durch die Wirkung dieses Führungsgliedes vergrößert. Dabei müssen relativ große Abweichungen gegenüber der für den Höhenstand der Sonne geforderten Neigung in Kauf genommen werden. Nachteilig ist dabei die versetzte Anordnung der Achsen für die Kinematik und für die mechanische Belastung des Getriebes. Zur Berücksichtigung der jahreszeitlich veränderlichen Höhe der Sonne in der Mittagsstellung wird eine Veränderung der Führungsgliedlänge oder eine Verschiebung des Gelenkpunktes quer zur vertikalen Achse empfohlen. Die Wirkung dieser Maßnahmen ist begrenzt.

Auch im US-Patent 4 109 640 und in den Patents Abstracts of Japan, Bd 7, Nr. 37 (M-193) (1182), 15. Februar 1983 ist eine Nachführungseinrichtung angegeben, bei der mit Hilfe eines Führungsgliedes die Neigung des Solargerätes kontinuierlich erhöht wird, wenn das Gerät aus der Mittagsstellung gedreht wird.

Sie eignet sich nur für eine angenäherte Nachführung. Bei der Anpassung an die jahreszeitlich veränderlichen Sonnenbahnen lassen sich große Abweichungen nicht vermeiden, wenn nur die in der angegebenen Literatur genannten Maßnahmen (Längenänderung des Führungsgliedes und Verschiebung des Gelenkpunktes) getroffen werden.

Eine genaue Nachführung ist für konzentrierende Salareinrichtungen und für Heliostote, sowie meist in Maschinen- und Gerätebau wichtig. Für andere Empfänger ist eine genaue Nachführung nicht zwingend erforderlich, weil die auftreffende Energie proportional dem Cosinus des Winkels zwischen der Senkrechten auf der Gene-

ratorfläche und der Einfallsrichtung ist, der bei kleinen Winkeln nur wenig von 100 % abweicht. Aus Gründen der Kühlwirkung durch natürliche Konvektion und zum Verbessern des Leistungsverlaufes während des Tages kann auch bei sehr hohem Sonnenstand ein Mindestneigungswinkel (z. B. von 30°) erwünscht sein. An die Nachführungseinrichtungen werden somit Anforderungen gestellt, die mit den herkömmlichen Mitteln unvollständig oder mit großem Aufwand erfüllt werden.

Der Erfindung liegt die Aufgabe zugrunde, eine zuverlässige, mit möglichst geringem Aufwand herstell- und betreibbare Nachführungseinrichtung zu finden, die in einfacher Weise den jeweiligen Gegebenheiten angepaßt werden kann.

Gelöst wird die Aufgabe bei einer gattungsmäßigen Einrichtung durch die kennzeichnenden Merkmale einer der Ansprüche 1 bis 4. Das nachzuführende Gerät, zum Beispiel ein fotovoltaischer Generator, wird bevorzugt um eine vertikale Achse drehbar auf bevorzugt einer horizontalen Achse neigbar angeordnet.

Das Führungsglied ist in der höchsten Stellung in einer vertikalen Symmetrieebene angeordnet und verbindet das nachgeführte Gerät mit einem festen Punkt. Die Drehung erfolgt bei Solareinrichtungen im Normalfall entsprechend dem Azimut der Sonne. Die Neigung wird dabei durch die erfindungsgemäße Nachführungseinrichtung genau oder mit vorteilhafter Abweichung dem Höhenstand der Sonne entsprechend zwangsläufig eingestellt. Spezielle Anforderungen können durch die im folgenden genannten Maßnahmen bzw. deren Kombinationen und Ausgestaltungen erfüllt werden. Variationsmöglichkeiten ergeben sich auch bei der Anordnung (z. B. durch Verschiebung) der Achsen und der Gestaltung der Gelenke.

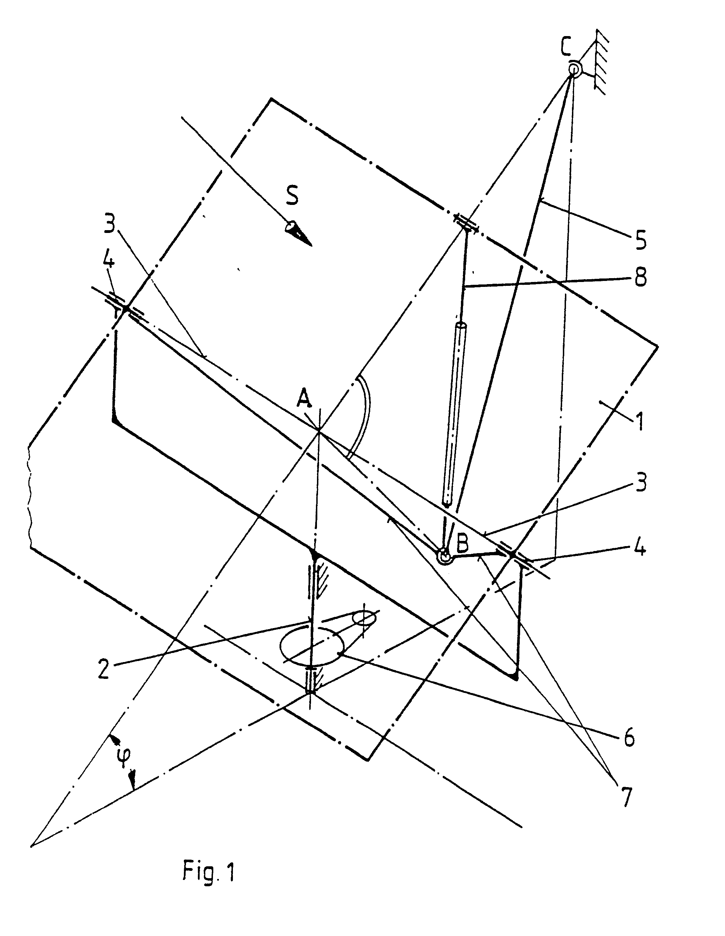

Anhand der Bilder werden verschiedene Ausführungen beschrieben und die Funktionen erläutert. Es werden zunächst genau nachführende Systeme dargestellt (Fig. 1 bis 8). Die Richtung, auf die das Gerät einzustellen ist, z. B. Einstrahlungsrichtung der Sonne, ist mit S bezeichnet.

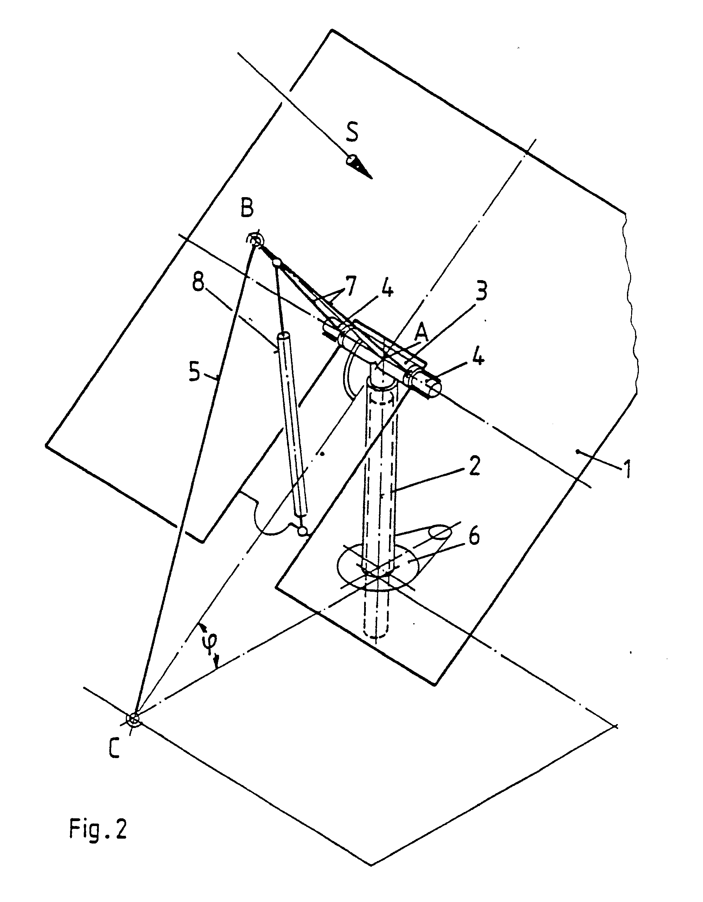

Fig. 1 und 2 zeigen Beispiele in isometrischer Darstellung. Der Generator 1 befindet sich in Mittagsstellung zur Zeit der Tagundnachtgleiche (Äquinoktium). An der vertikalen Drehachse 2 ist die horizontale Kippachse 3 montiert, an deren Lagerstellen d der Generator 1 angebracht ist. Der Schnittpunkt beider Achsen wird mit A bezeichnet. Die angenommene geographische Breite φ des Aufstellungsortes ist 38°. Die Neigung des Generators während seiner Drehung um die vertikale Achse wird durch das Führungsglied 5 eingestellt. Das mitbewegte Gelenk B des Führungsgliedes ist mit dem Generator durch die Glieder 7 und 8 verbunden, das Gelenk C ist in Mittagsstellung (Südrichtung auf der nördlichen Hemisphäre bzw. Nordrichtung auf der südlichen Hemisphäre) hinter der Achse 2 (bei Fig. 1) bzw. vor der Achse 2 (bei Fig. 2) erdfest montiert. Die Drehung des Generators um die Hauptachse wird durch den Antrieb 6 bewirkt.

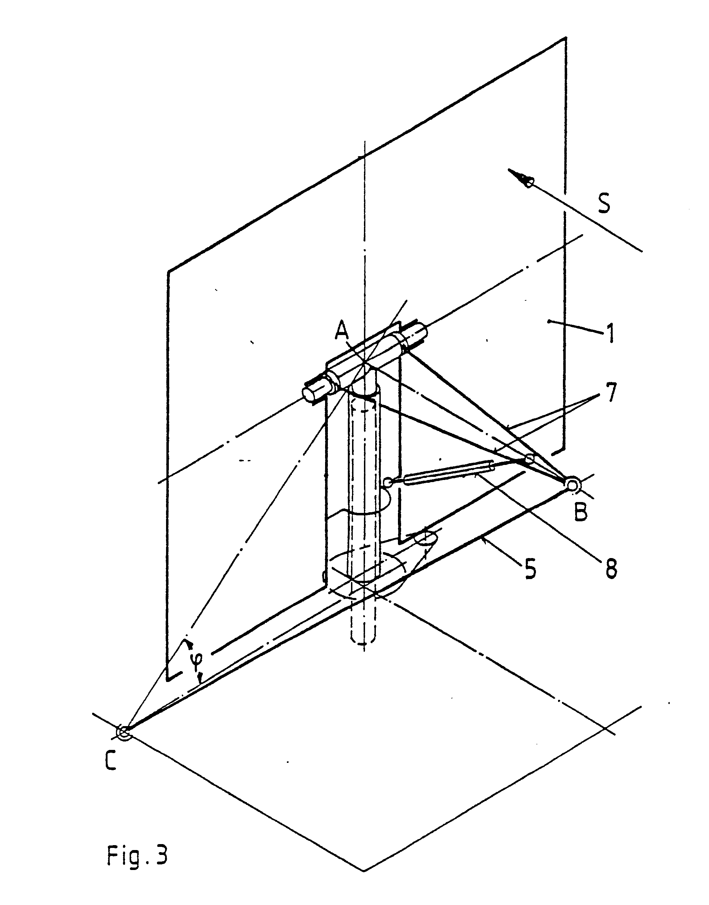

Eine genaue Nachführung wird erreicht, wenn die Verbindungslinie zwischen dem Achsenschnittpunkt A und dem Gelenkpunkt C unter dem Winkel φ, der geographischen Breite des Aufstellungsortes, gegenüber der Horizontalen verläuft und wenn AB senkrecht zu AC steht. Unter diesen Bedingungen bewegt sich Gelenkpunkt B auf einem Kreisbogen, dessen Flächen-, normale parallel zur Erdachse ist. Es wird somit eine Bewegung der Senkrechten auf dem Generator entsprechend der parallaktischen Montierung erreicht, jedoch mit dem Unterschied, daß der Generator in vorteilhafter Weise montiert ist. In Fig. 3 ist der Generator nach der Schwenkung nach Osten bzw. Westen dargestellt. Die Vertikalstellung des Generators durch die Drehung der vertikalen Achse um 90° wurde durch das Führungsglied 5 zwangsläufig erreicht. Für diese genaue Nachführung ist gemäß Fig. d auch eine Anordnung des Führungsgliedes 5 zwischen B und C' möglich.

Maßnahmen zur Berücksichtigung der jahreszeitlich veränderlichen Stellung der Sonne gegenüber der Erdachse werden weiter unten erläutert.

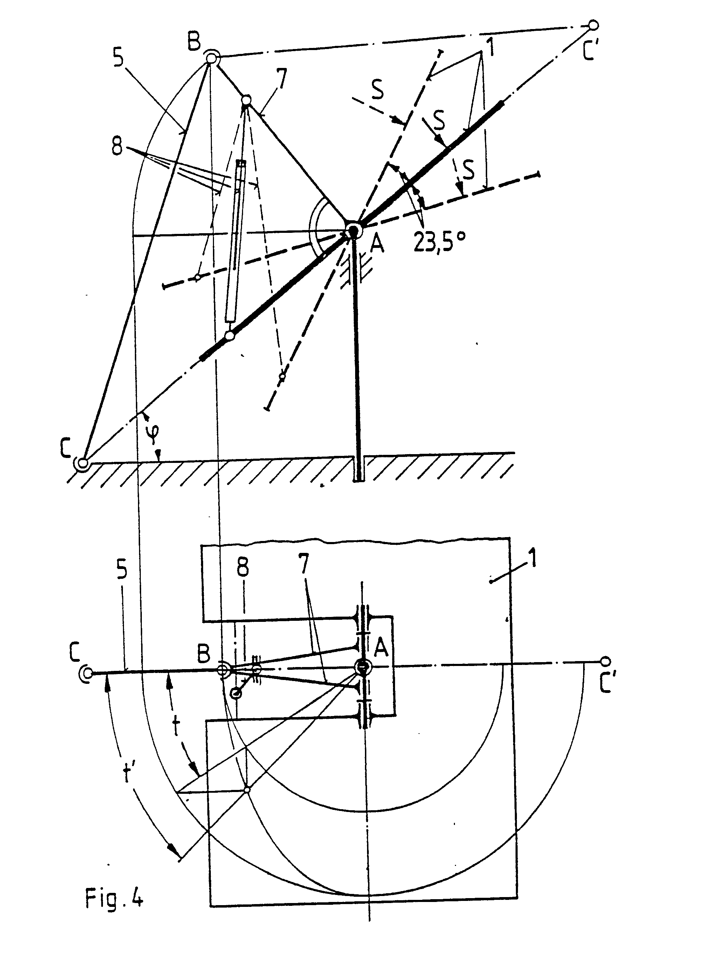

Die Draufsicht in Fig. 4 dient zur Erläuterung der eforderlichen Drehung der vertikalen Achse entsprechend dem Azimut der Sonne im Tagesverlauf. Um eine genaue Nachführung zu erzielen, muß sich der Punkt B mit der Winkelgeschwindigkeit von 15°/Stunde um die Achse AC drehen. Das verlangt eine ungleichförmige Bewegung um die vertikale Achse. Zwischen dem Stundenwinkel t und dem zugehörigen Drehwinkel t' der vertikalen Drehachse (siehe Draufsicht in 4) gilt die Beziehung

$$\tan t' = \tan t/\sin \varphi \qquad (1)$$

Der Nullpunkt der Winkelzählung ist dabei die Mittagsstellung.

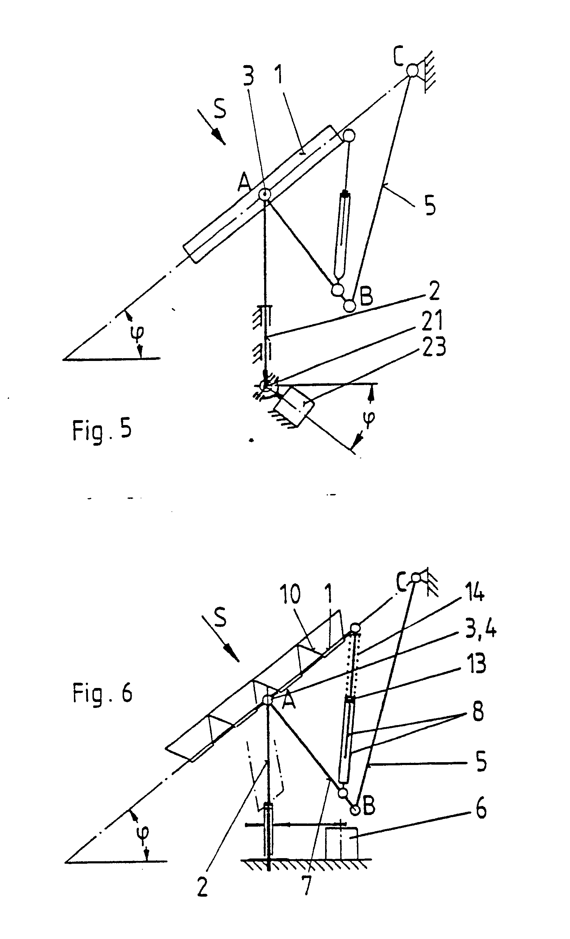

Diese ungleichförmige Bewegung kann entsprechend Fig. 5 über ein Kreuzgelenk 21 mit einem gleichförmig drehenden Antrieb 23 erzeugt werden. Der Kreuzungswinkel ist dabei 90°-φ.

Die Anordnung gemäß Fig. 1 (mit dem festen Gelenkpunkt C oberhalb des Schnittpunktes A) ist immer dann besonders günstig, wenn eine geeignete Befestigungsmöglichkeit für Punkt C, z. B. an einem Gebäude, vorhanden ist. Der Punkt C kann jedoch auch beispielsweise an einem Stab oder einem gespannten Seil bzw. Netz befestigt werden.

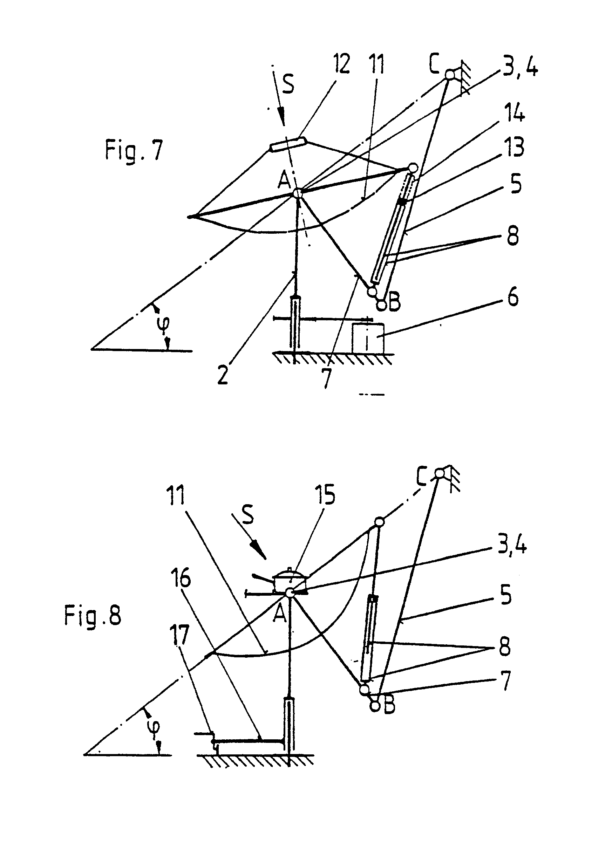

In Fig. 6-8 sind drei Anwendungsbeispiele mit strahlungskonzentrierenden Geräten skizziert. Fig. 6 zeigt einen Solorgenerator mit Spiegeltrichtern 10 zur Reflexion der ankommenden Strahlung auf die Solarzellen. In Fig. 7 wird ein Konzentrator 11 nachgeführt, der aus einzelnen ebenen Spiegeln besteht, die auf einen mitgeführten Empfänger 12 reflektieren. Diese Anordnungen ermöglichen beispielsweise durch Kombination von Solarzellen mit billigen Spiegeln oder Linsen eine preisgünstige Stromquelle zu schaffen, deren mögliche Größe von Kleinstgeneratoren bis zu Kraftwerken (bestehend aus mehreren Einzelgeneratoren) reicht.

Die Gestaltung der Konzentraren und der Empfänger wird den speziellen Anforderungen, z. B. einer gleichmäßigen Verteilung der eingestrahlten Energie auf der Oberfläche von Solarzellen angepaßt.

In Fig. 6 und 7 ist auch eine Möglichkeit gezeigt, wie eine Sicherung gegen Beschädigung des Gerätes beispielsweise bei Unwetter oder bei zu hoher Zellentemperatur vorgesehen werden kann. Das Führungsglied 8 wird dabei nach Ausklinken der Gewindemutter 13 durch die Feder 14 so verlängert, daß das Gerät nach unten in eine sichere Stellung kippt (in Fig. 6 strichpunktiert eingezeichnet).

Fig. 8 zeigt einen Solarkocher mit einem nachgeführten Parabolspiegel. Anstelle des Topfes 15 können andere zu heizende Einrichtungen treten. Ebenso können anstelle des Parabolspiegels in bekannter Weise andere strahlungskonzentrierende Einrichtungen (Spiegel, Linsen und Kombinationen) eingesetzt werden. Die Ausrichtung der vertikalen Achse in Fig. 8 erfolgt beispielsweise von Hand mit einem an der Achse 2 angebrachten Arm 16, der mit der Fixiereinrichtung 17 positioniert wird. Auf diese Weise sind äußerst einfache und wirkungsvolle Solarkocher herstellbar.

Wenn dafür gesorgt wird, daß das Führungsglied 5 immer auf Zug beansprucht wird, dann kann ein Seil, eine Kette oder ein anderes auf Zug führendes Glied benutzt werden. Die Zugbelastung kann durch entsprechende Gewichtsverteilung an der Kippachse 3, durch Gegengewichte oder durch Federkraft erzielt werden. Durch die aerodynamische Gestaltung des Generators ist dafür zu sorgen, daß die Windkräfte das Führungsglied ebenfalls auf Zug beanspruchen.

Die Gelenke können Kugelgelenke oder Haken, Ringe, Ösen, Schlaufen oder ähnliche gegeneinander verdrehbare Elemente oder auch Seilbefestigungen sein.

Nachführungseinrichtungen lassen sich auch zum Ausrichten von Heliostaten verwenden. Die Spiegelfläche onstelle des Generators wird dabei so ausgerichtet, daß sie senkrecht steht zur Winkelhalbierenden zwischen der veränderlichen Einfallsrichtung der Sonnenstrahlen und der unveränderlichen Richtung vom Heliostaten zum Empfänger. Der Spiegel erhält hierzu eine Grundeinstellung entsprechend den Aufstellungsbedingungen und eine Nachführung um den halben Winkel, den ein genau nachgeführter Generator erfordert.

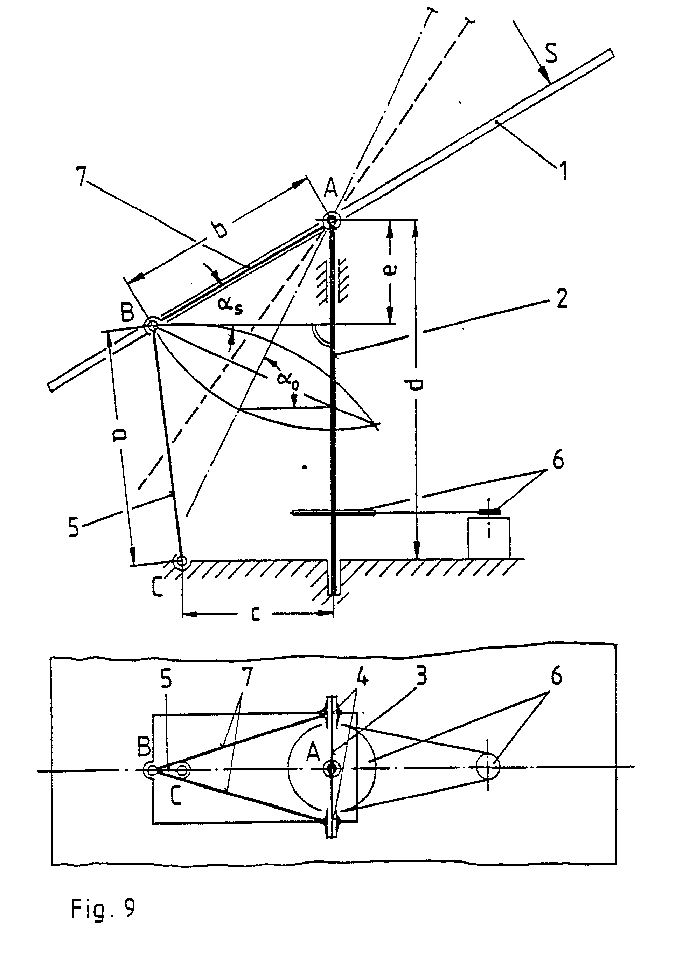

Für geringere Genauigkeitsansprüche bzw. für spezielle Nachführbahnen lassen sich erfindungsgemäß einfachere Nachführeinrichtungen erstellen. Fig. 9 zeigt eine Anordnung eines entsprechenden Getriebes. Die einzelnen Glieder sind entsprechend Fig. 1 beziffert. Das Führungsglied 5 ist mit dem Generator verbunden ; auf eine Verstellbarkeit entsprechend der Deklination der Sonne wird in der einfachsten Ausführung verzichtet. Durch geeignete Wahl der Längen a bis e gelingt es, die Drehung und Kippung des Generators so zu koppeln, daß eine angenäherte Ausrichtung erreicht wird. Es gelten folgende Beziehungen zwischen den Abmessungen und den Neigungswinkeln $\alpha$ (Mittagsstellung) und $\alpha_0$ (Ausrichtung nach Osten bzw. Westen) :

$$\sin \alpha = e/b \qquad (2)$$

$$\sin \alpha = (b^2 + c^2 + d^2 - a^2)/2bd \qquad (3)$$

Die Konstruktion der Winkel ist in Fig. 9 eingetragen.

Besonders günstige Anordnungen ergeben sich, wenn für $\alpha_s$ der Breitengrad des Aufstellortes bzw. ein Mindestneigungswinkel und für $\alpha_0$ ein Wert zwischen 50° und 80°, bevorzugt im Bereich von 65°, gewählt wird.

Auch bei der angenäherten Nachführung ist eine Anordnung des Drehpunktes C entsprechend Fig. 1 möglich.

Bei der Wahl der Längen sind selbstverständlich die Regeln der Getriebelehre zu beachten, so daß ein Verklemmen vermieden wird. Eine Drehung über die Ost- bzw. Westrichtung hinaus (im Sommerhalbjahr) ist möglich.

Durch Verwendung von zwei Führungsstangen 5 konn die Stabilität der Anordnung, insbesondere bei sehr großen Generatoren, erhöht werden. Die beiden Führungsstangen sind dann symmetrisch zur Südrichtung und in der Mittagsstellung vorteilhaft in der Ebene durch die vertikale Getriebeachse angeordnet.

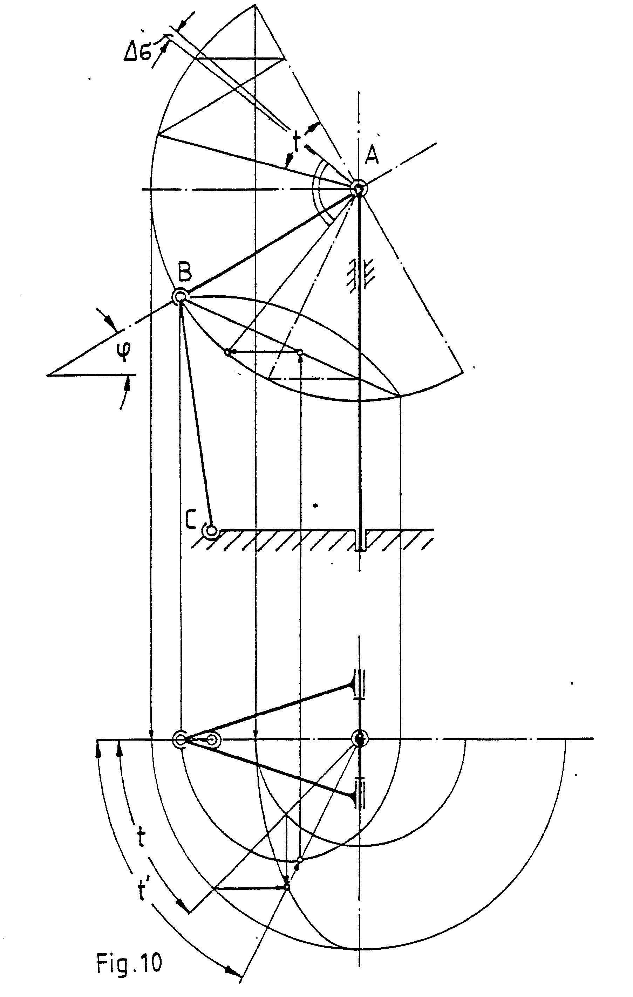

In Fig. 10 ist dargestellt, wie die Winkelabweichung $\Delta 6$ zwischen dem Sonnenstand und der Senkrechten auf dem Generator zur Zeit des Aquinoktiums ermittelt werden kann. Dabei wird wie bei der genau nachführenden Anordnung der Generator beim Stundenwinkel t der Sonne dem Azimut t' entsprechend um die vertikale Achse gedreht.

Es gibt eine Reihe von Möglichkeiten, die Nachführungseinrichtung den örtlichen Gegebenheiten und dem jahreszeitlich veränderlichen Sonnenstand anzupassen. In den Fig. 1 bis 8 ist hierzu schematisch eine längenverstellbare Stange 8 dargestellt worden, durch die eine Neigung des Generators bezüglich der Achse AC eingestellt werden kann. Einfach zu verwirklichen ist auch ein klemmbares Ringsegment an der Achse 3, das mit dem Gerät schwenkt. Auch durch Veränderung der Länge a (Abstand BC) und/oder des Abstandes c und/oder Verschiebung des Punktes C können der Neigungswinkel und der Einstellbereich in weiten Grenzen verändert werden.

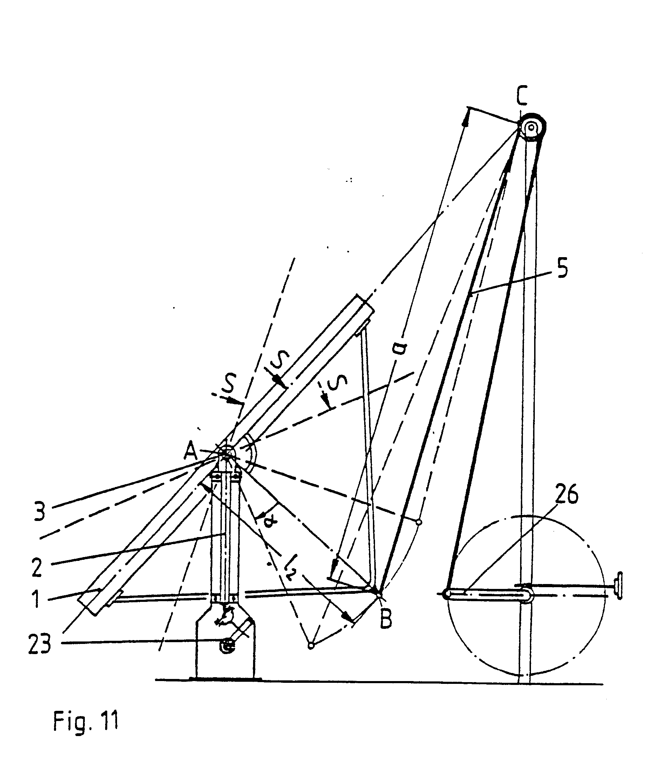

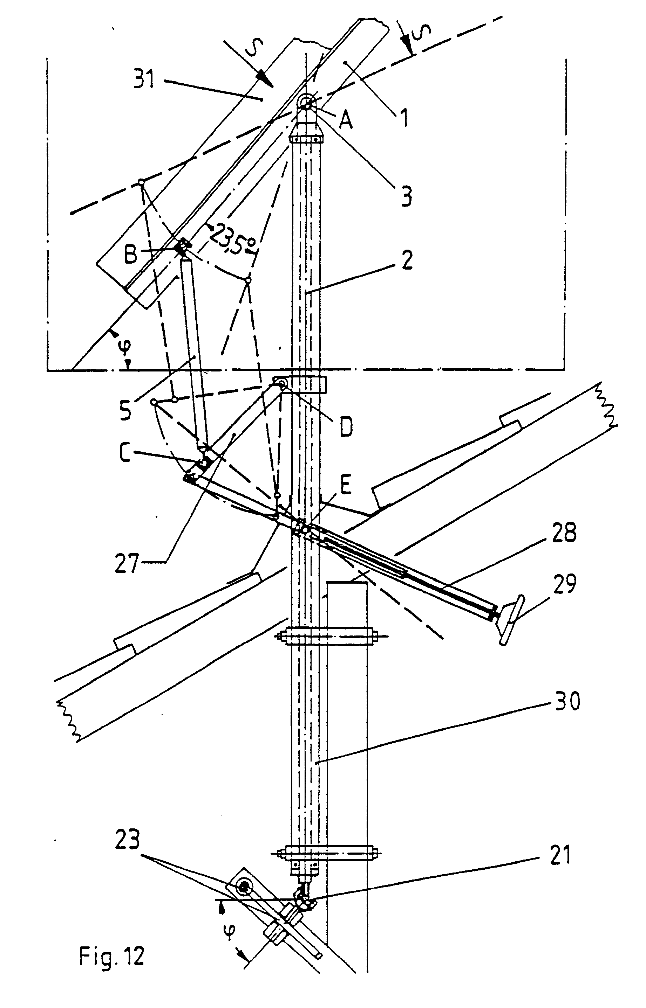

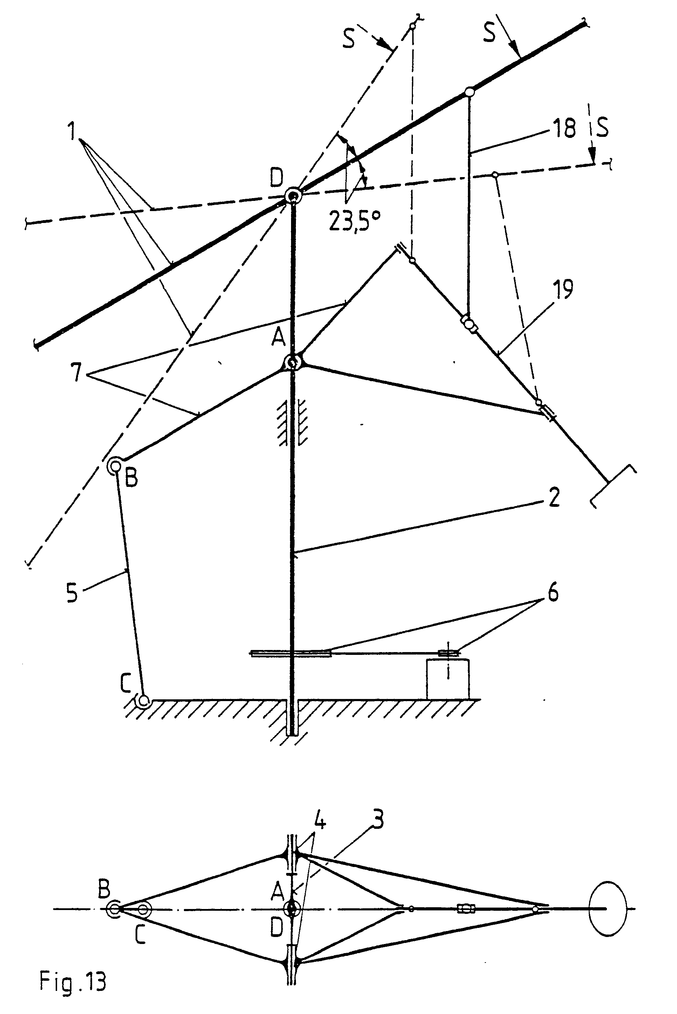

Fig. 11 zeigt eine Nachführeinrichtung mit jahreszeitlicher Einstellung durch Veränderung der Länge des Führungsgliedes 5 über eine Kurbel 26. In Fig. 12 ist der Drehpunkt C an einer Schwinge 27 befestigt, so daß er mit dem Handrad 29 und der Spindel 28 jahreszeitlich eingestellt werden kann. Es ist ein an einem Hausdach befestigtes Gerät dargestellt, wobei das Handrad 29 im Hausinnern liegt. Die skizzierten Handverstellungen können durch Organe ersetzt werden, die mit der Hauptbewegung gekoppelt sind. Fig. 13 zeigt eine alternative Anordnung zu Fig. 12. Die Nachstellung entsprechend der jahreszeitlichen Deklination der Sonne wird in diesem Fall durch ein verschiebbares Koppelglied 18 zwischen dem Generator 1 und dem Getriebeglied 7, verstellbar über die Spindel 19, erreicht. Das Getriebeglied 7 ist hierzu über seine Anlenkung an der horizontalen Achse hinaus verlängert. Der Drehpunkt D des Generators ist aus dem Drehpunkt A heraus verlegt. Damit lassen sich die räumlichen Bedingungen günstig einhalten und eine zusätzliche Übersetzung der Drehwinkel erreichen.

Eine verstärkte Kippung kann auch durch feste Anschläge seitlich des Führungsgliedes 5 erreicht werden, die ein bewegliches Führungsglied 5 (Seil) umlenken. Bei Anordnungen nach Fig. 1 bis 8 ist ein Mindestwinkel $\varphi$ erforderlich. In Äquatornähe kann der Gelenkpunkt C unter einem größeren Winkel angeordnet werden als dem Breitengrad entspricht und die Abweichung durch eine entsprechende Veränderung der wirksamen Länge des Führungsgliedes 5 während des Tages erreicht werden. Diese Veränderung ist besonders einfach zu verwirklichen, wenn das Seil bei Punkt C und darunter umgelenkt und an einer Scheibe oder einem Hebel an der Hauptachse 2 befestigt wird.

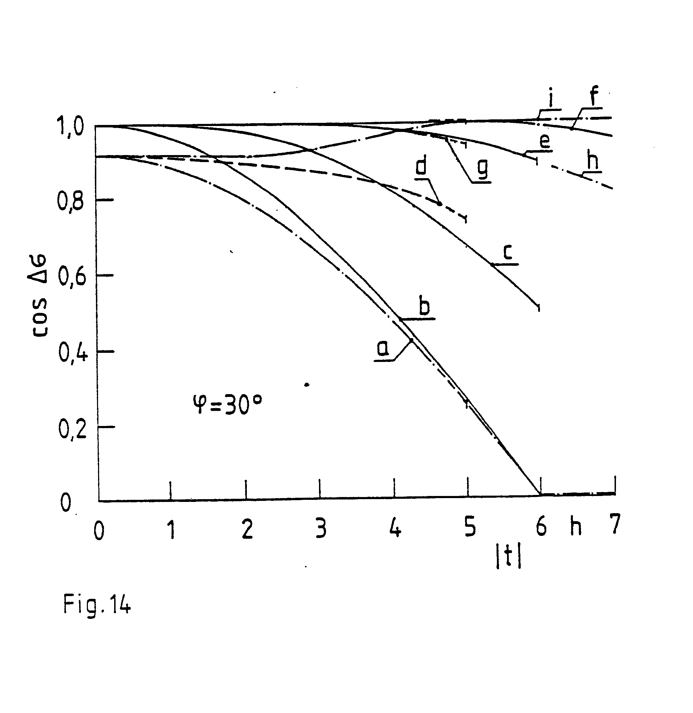

In Fig. 14 sind die Werte für cos $\Delta$ 6 für die verschiedenen Systeme bei einer Aufstellung auf dem 30sten Breitengrad aufgetragen. Die Ordinatenwerte entsprechen somit für den betreffenden Zeitpunkt Itl (= absoluter zeitlicher Abstand von der Mittagszeit) dem Verhältnis der erfaßten zur erfassbaren direkten Strahlungsleistung. Für das genau nachführende System (Fig. 1 bis 8, 11) ist dieses Verhältnis gleich 1 (Kurve i). Beim starr aufgestellten Generator, der entsprechend der geographischen Breite schräg montiert ist, ergeben sich die Kurven a (Sommersonnenwende bzw. Wintersonnenwende, bei der die Kurve bei ca. 5 Uhr endet) und Kurve b (Tagundnachtgleiche). Kurve c entspricht einem unter 30° geneigten Generator, der nur azimutal nachgeführt wird zur Zeit der Tagundnachgleiche. Die 3 Kurven d, e und f entsprechen der in Fig. 9 und 10 gezeichneten Anordnung mit den dort gewählten Abmessungen (ohne jahreszeitliche Verstellung) für die Wintersonnenwende (d), Tagundnachtgleiche (e) und Sommersonnenwende (f). Mit jahreszeitlicher Einstellung gemäß Fig. 13 gelten die Kurven g für die Wintersonnenwende, e für Tagundnachtgleiche und h für die Sommersonnenwende.

Wenn bei der Anordnung gemäß Fig. nur im Winterhalbjahr die Deklination nachgestellt wird, so daß bei Wintersonnenwende der Generator um 23,5° gegenüber der Ausgangslage geneigt ist (gestrichelte Stellung in Fig. 9), dann gelten die Kurven e, f und g. Diese Kombination ist zum Beispiel besonders vorteilhaft, wenn ein Mindestneigungswinkel nicht unterschritten werden soll.

Die Auswertung in Fig. 14 zeigt, daß mit der erfindungsgemäßen Nachführung eine für die jeweiligen Gegebenheiten vorteilhafte Ausführung erreicht werden kann.

Für den Antrieb der Nachführungseinrichtung gibt es viele Möglichkeiten : Beispielsweise kann ein Gleichstrommotor bei der Verwendung fotovoltaischer Generatoren eingesetzt werden ; es lassen sich Werke mit Feder oder Gewichtsspeicher verwenden ; der Einsatz von verschiedenen Motoren, hydraulischen und pneumatischen und anderen Antriebsquellen ist möglich.

Um zu erreichen, daß die Nachführungseinrichtung in der richtigen Position ausgerichtet wird, können Steuerungen und Regelungen verwendet werden. Die Steuerung kann beispielsweise nach einem Zeitprogramm erfolgen. Es kann auch Vergleich des Istwertes (Position des Gerätes) mit dem Sollwert (nachgeführte Position) anhand von Messungen ein Regelsignal für den Nachführantrieb abgeleitet werden. Beispielsweise wird bei einer Wand, die senkrecht zur Generatorfläche angebracht ist, bei Abweichungen von der genauen Ausrichtung eine Licht- und eine Schattenseite enstehen, die zur Steuerung oder Regelung des Antriebs verwendet werden kann. Dabei können Sensoren verwendet werden oder die unterschiedliche Energieeinstrahlung auf beiden Seiten der Wand. Es kann ein Schrittwerk eingesetzt werden, das immer dann um einen Schritt weiterschaltet, sobald eine Abweichung von der richtigen Position fesgestellt wird. Vor Sonnenaufgang wird in die Ausgangsstellung zurückgefahren. Auch ein Getriebe, das eine gleichförmige rotierende Bewegung in eine oszillierende Bewegung mit entsprechendem Geschwindigkeitsverlauf umsetzt, zum Beispiel durch eine erweiterte Kurbelschwinge, ist verwendbar. Dann kann die Nachführung mit einem Motor mit einheitlicher Drehrichtung und gegebenenfalls konstanter Drehzahl angetrieben werden.

Bei Konzentratoren, z. B. nach Fig. 6 und 7 ist die Leistungsdichte auf dem Empfänger asymmetrisch sobald die Nachführung abweicht. Diese Asymmetrie kann zur Regelung der Position dienen. Bei bewölktem Himmel ist durch eine Regelung ein höherer Energiegewinn möglich, weil dann die günstigste Position von der Stellung der Sonne wesentlich abweichen kann.

Bei den Anwendungen im Maschinenbau ist eine Vielzahl von Möglichkeiten zur Steuerung bzw. Regelung der Position gegeben ; zum Beispiel über elektrische oder optische Sensoren. Nachdem die Stellung des Objektes, dem das Gerät nachzuführen ist, meist mechanisch erfaßt werden kann, lassen sich die Nachführeinrichtungen in einfacher Weise zum Beispiel über Kontakte einstellen.

Der Schwerpunkt des nachgeführten Gerätes kann in den Schnittpunkt der vertikalen und der horizontalen Getriebeachsen gelegt werden, so daß die Dreheinrichtung nur durch Reibungs- und Windkräfte beansprucht wird.

Durch Verlagerung des Schwerpunktes aus diesem Drehpunkt oder durch Schrägstellung der Achse 2 kann das Getriebe gezielt belastet werden.

Nachdem der Antrieb nur auf eine Drehachse wirkt, können mehrere Geräte von nur einem Antrieb aus, zum Beispiel über Ketten, Zahnriemen oder storre Koppelglieder parallel betrieben werden.

Nachführungseinrichtungen mit dem Gelenkpunkt C oberhalb von Punkt A können so gestaltet werden, daß eine vollständige Drehung der vertikalen Achse möglich ist und somit ein vollständiger Kreisbogen nachgeführt werden kann.

Die Nachführeinrichtungen können in einfacher Weise den örtlichen Gegebenheiten angepaßt werden, so daß eine Standardisierung möglich ist. Die Elemente der Nachführungseinrichtung lassen sich in einfacher Weise bereitstellen und gegen Witterungseinflüsse schützen. Die Erfindung ermöglicht somit Nachführeinrichtungen mit geringem Aufwand herzustellen und zu betreiben, so daß ein Hindernis auf dem Weg zu einer intensiven technischen Nutzung der Sonnenenergie überwunden werden kann.

## Patentansprüche

1. Nachführungseinrichtung zum Ausrichten eines Gerätes (1) nach einem sich auf einer bogenförmigen Bahn bewegenden Objekt, beispielsweise zum Nachführen einer Solareinrichtung, wobei die Bewegung des Gerätes um zwei Achsen (2, 3) erfolgt und die Bewegung um die zweite Achse (3) zwangsläufig mit der Bewegung um die erste Achse (2) durch mindestens ein Führungsglied (5) mit einem mitbewegten Gelenkpunkt (B) gekoppelt ist und das Führungsglied (5) um einen bezüglich der Hauptbewegung nicht mitbewegten Gelenkpunkt (C) schwenkt, welcher außerhalb der ersten Achse (2) des Gerätes liegt, dadurch gekennzeichnet, daß die Achsen (2, 3) sich schneiden, und daß das Führungsglied so angeordnet ist, daß sich sein mitbewegter Gelenkpunkt (B) auf einem Kreisbogen bewegt, dessen Mittelpunkt der Schnittpunkt (A) der Achsen ist, und daß die Verbindungslinie zwischen diesem Schnittpunkt (A) und dem nicht mitbewegten Gelenkpunkt (C) genau oder angenähert parallel zur Erdachse bzw. zur Flächennormalen der Bahn des verfolgten Objektes ist.

2. Nachführungseinrichtung zum Ausrichten eines Gerätes (1) nach einem sich auf einer bogenförmigen Bahn bewegenden Objekt, beispielsweise zum Nachführen einer Solareinrichtung, wobei die Bewegung des Gerätes um zwei Achsen (2, 3) erfolgt und die Bewegung um die zweite Achse (3) zwangsläufig mit der Bewegung um die erste Achse (2) durch mindestens ein Führungsglied (5) mit einem mitbewegten Gelenkpunkt (B) gekoppelt ist und das Führungsglied (5) um einen bezüglich der Hauptbewegung nicht mitbewegten Gelenkpunkt (C) schwenkt, welcher außerhalb der ersten Achse (2) des Gerätes liegt, dadurch gekennzeichnet, daß die Achsen (2, 3) sich schneiden, daß die Länge des Führungsgliedes einstellbar ist, und daß sich sein mitbewegter Gelenkpunkt (B) auf einem Kreisbogen bewegt, dessen Mittelpunkt auf einer Geraden durch den Schnittpunkt der Achsen (2, 3) und den nicht mitbewegten Gelenkpunkt (C) liegt, welche genau oder angenähert parallel zur Erdachse bzw. zur Flächennormalen der Bahn des verfolgten Objektes ist.

3. Nachführungseinrichtung zum Ausrichten eines Gerätes (1) nach einem sich auf einer bogenförmigen Bahn bewegenden Objekt, beispielsweise zum Nachführen einer Solareinrichtung, wobei die Bewegung des Gerätes um zwei Achsen (2, D) erfolgt und die Bewegung um die zweite Achse (D) zwangsläufig mit der Bewegung um die erste Achse (2) durch mindestens ein Führungsglied (5) mit einem mitbewegten Gelenkpunkt (B) gekoppelt ist und das Führungsglied (5) um einen bezüglich der Hauptbewegung nicht mitbewegten Gelenkpunkt (C) schwenkt, welcher außerhalb der ersten Achse (2) des Gerätes liegt, dadurch gekennzeichnet, daß parallel zur zweiten Achse (D) eine weitere Achse (4) vorgesehen ist, an welcher ein Getriebeglied (7) angelenkt und mit dem mitbewegten Gelenkpunkt (B) verbunden ist, und welche über ein Koppelglied (18) mit dem Gerät verstellbar verbunden ist.

4. Nachführungseinrichtung zum Ausrichten eines Gerätes (1) nach einem sich auf einer bogenförmigen Bahn bewegenden Objekt, beispielsweise zum Nachführen einer Solareinrichtung, wobei die Bewegung des Gerätes um zwei Achsen (2, 3) erfolgt und die Bewegung um die zweite Achse (3) zwangsläufig mit der Bewegung um die erste Achse (2) durch mindestens ein Führungsglied (5) mit einem mitbewegten Gelenkpunkt (B) gekoppelt ist und das Führungsglied (5) um einen bezüglich der Hauptbewegung nicht mitbewegten Gelenkpunkt (C) schwenkt, welcher außerhalb der ersten Achse (2) des Gerätes liegt, dadurch gekennzeichnet, daß die Achsen (2, 3) sich schneiden und die Lage des nicht mitbewegten Gelenkpunktes (C) auf einer bogenförmigen Bahn einstellbar ist, die in der Ebene der ersten Achse liegt, und daß nach Drehung um die vertikale Achse aus der Mittelstellung um 90° der Winkel zwischen der Verbindungslinie von Achsenschnittpunkt (A) und mitbewegtem Gelenkpunkt (B) gegenüber der Horizontalen ca. 50 bis 80° beträgt.

5. Nachführungseinrichtung nach Anspruch 1 oder 2, dadurch gekennzeichnet, daß der mitbewegte Gelenkpunkt (B) des Führungsgliedes mit dem nachzuführenden Gerät (1) über zwei Getriebeglieder (7, 8) verbunden ist, wobei ein Getriebeglied (8) längenverstellbar ist.

6. Nachführungseinrichtung nach Anspruch 5 dadurch gekennzeichnet, daß das längenverstellbare Getriebeglied (8) ein klemmbares Ringsegment ist.

7. Nachführungseinrichtung nach einem der vorangehanden Ansprüche, dadurch gekennzeichnet, daß der nicht mitbewegte Gelenkpunkt (C) auf einer Schwinge (27) angeordnet ist, die entsprechend einer gewünschten Schrägstellung des nachzuführenden Gerätes (1) verstellbar ist.

8. Nachführungseinrichtung nach einem der vorangehenden Ansprüche, dadurch gekennzeichnet, daß das Führungsglied (5) als Seil oder Kette ausgeführt wird.

9. Nachführungseinrichtung nach einem der vorangehenden Ansprüche, dadurch gekennzeichnet, daß die Bewegung um die erste Achse (2) über ein Kreuzgelenk (21) erfolgt.

10. Nachführungseinrichtung nach einem der vorangehenden Ansprüche, dadurch gekennzeichnet, daß die erste Achse (2) des Gerätes (1) Seile, Ketten oder starre Koppelglieder zum Parallelbetrieb mit weiteren Geräten aufweist.

## Claims

1. Tracking system for the alignment or boresighting of a device (1) according to an object moving along an arcuate orbit, for instance for tracking a solar equipment, wherein the movement of the device takes place about two axes (2, 3) while the movement about the second axis (3) is inevitably coupled to the movement about the first axis (2) by at least one guiding member (5) comprising a following point of articulation (B), and wherein said guiding member (5) pivots about a point of articulation (C) which does not follow in relation to the principal movement and is located outside the first axis (2) of said device, characterized in that the said axes (2, 3) intersect and that said guiding member is so arranged that its following point of articulation (B) moves along an arc whose center is the point of intersection (A) of said axes, and that the line connecting said point of intersection (A) with the non-following point of articulation (C) is precisely or approximately in parallel to the polar axis or to the normal of the surface of said orbit of the tracked object.

2. Tracking system for the alignment or boresighting of a device (1) according to an object moving along an arcuate orbit, for instance for tracking a solar equipment, wherein the movement of the device takes place about two axes (2, 3) while the movement about the second axis (3) is inevitably coupled to the movement about the first axis (2) by at least one guiding member (5) comprising a following point of articulation (B), and wherein said guiding member (5) pivots about a point of articulation (C) which does not follow in relation to the principal movement and is located outside the first axis (2) of said device, characterized in that the said axes (2, 3) intersect, that the length of said guiding member is adjustable, and that said member's following point of articulation (B) moves along an arc whose center is located on a straight line passing through the point of intersection of said axes (2, 3) and the non-following point of articulation (C), said straight line being precisely or approximately parallel to the polar axis or to the normal of the surface of the orbit of said tracked object.

3. Tracking system for the alignment or boresighting of a device (1) according to an object moving a long an arcuate orbit, for instance for tracking a solar equipment, wherein the movement of the device takes place about two axes (2, D) while the movement about the second axis (D) is inevitably coupled to the movement about the first axis (2) by at least one guiding member (5) comprising a following point of articulation (B), and wherein said guiding member (5) pivots about a point of articulation (C) which does not follow in relation to the principal movement and is located outside the first axis (2) of said device, characterized in that another axis (A) is provided in parallel to said second axis (D), a link (7) being articulated to said other axis (A) and being connected to said following point of articulation (B), which other axis (A) is adjustably connected to said device through a coupling member (18).

4. Tracking system for the alignment or boresighting of a device (1) according to an object moving a long an arcuate orbit, for instance for tracking a solar equipment, wherein the movement of the device takes place about two axes (2, 3) while the movement about the second axis (3) is inevitably coupled to the movement about the first axis (2) by at least one guiding member (5) comprising a following point of articulation (B), and wherein said guiding member (5) pivots about a point of articulation (C) which does not follow in relation to the principal movement and is located outside the first axis (2) of said device, characterized in that the said axes (2, 3) intersect and that the position of the non-following point of articulation (C) is adjustable a long an arcuate path located in the plane of the first axis, and that after a rotation about the vertical axis by 90° from the center position, the angle enclosed by the line connecting the point of intersection (A) of said axes with said following point of articulation (B), on the one hand, and the horizontal, on the other hand, is 50° to 80° approximately.

5. Tracking system according to Claim 1 or 2, characterized in that the following point of articulation (B) of said guiding member is linked up to the device (1) to be tracked through two links (7, 8) one of which (8) is adjustable in length.

6. Tracking system according to Claim 5, characterized in that said link (B) adjustable in length is a clampable ring segment.

7. Tracking system according to any of the preceding Claims, characterized in that the non-following point of articulation (C) is arranged on a lever (27) which is adjustable in correspondence with a desired inclined position of the device (1) to be tracked.

8. Tracking system according to any of the preceding Claims, characterized in that said guiding member (5) is realized in the form of a cable or a chain.

9. Tracking system according to any of the preceding Claims, characterized in that the movement about the first axis (2) is realized through a Cardan universal joint (21).

10. Tracking system according to any of the preceding Claims, characterized in that the first axis (2) of said device (1) comprises cables, chains or rigid coupling elements for operation in parallel to other devices.

## Revendications

1. Système orienteur pour l'orientation d'un dispositif ou instrument (1) selon un objet parcourant une orbite arquée, par exemple pour l'orientation d'un dispositif solaire, le mouvement du dispositif se faisant autour de deux axes (2, 3) et le mouvement autour du deuxième axe (3) étant inévitablement couplé au mouvement autour du premier axe (2) par au moins un élément de guidage (5) ayant un point d'articulation (B) entraîné, et ledit élément de guidage (5) pivotant autour d'un point d'articulation (C) qui n'est pas entraîné relativement au mouvement principal et qui se trouve hors dudit premier axe (2) du dispositif, caractérisé en ce que lesdits axes (2, 3) se coupent, et que ledit élément de guidage (5) est disposé tellement que son point d'articulation entraîné parcourt un arc de cercle dont le centre est le point d'intersection (A) desdits axes, et que la ligne de jonction entre ledit point d'intersection (A) et le point d'articulation non entraîné (C) est précisément ou approximativement en parallèle à l'axe de la terre ou la normale de surface de ladite orbite d'objet suivi.

2. Système orienteur pour l'orientation d'un dispositif ou instrument (1) selon un objet parcourant une orbite arquée, par exemple pour l'orientation d'un dispositif solaire, le mouvement du dispositif se faisant autour de deux axes (2, 3) et le mouvement autour du deuxième axe (3) étant inévitablement couplé au mouvement autour du premier axe (2) par au moins un élément de guidage (5) ayant un point d'articulation (B) entraîné, et ledit élément de guidage (5) pivotant autour d'un point d'articulation (C) qui n'est pas entraîné relativement au mouvement principal et qui se trouve hors dudit premier axe (2) du dispositif, caractérisé en ce que lesdits axes (2, 3) se coupent, que la longueur dudit élément de guidage est ajustable, et que son point d'articulation entraîné (B) parcourt un arc de cercle dont le centre se trouve sur une ligne droite passant par le point d'intersection desdits axes (2, 3) et par ledit point d'articulation non entraîné (C), ladite ligne droite étant précisément ou approximativement en parallèle à l'axe de la terre ou la normale de suface de ladite orbite de l'objet suivi.

3. Système orienteur pour l'orientation d'un dispositif ou instrument (1) selon un objet parcourant une orbite arquée, par exemple pour l'orientation d'un dispositif solaire, le mouvement du dispositif se faisant autour de deux axes (2, D) et le mouvement autour du deuxième axe (D) étant inévitablement couplé au mouvement autour du premier axe (2) par au moins un élément de guidage (5) ayant un point d'articulation (B) entraîné, et ledit élément de guidage (5) pivotant autour d'un point d'articulation (C) qui n'est pas entraîné relativement au mouvement principal et qui se trouve hors dudit premier axe (2) du dispositif, caractérisé en ce qu'un autre axe (A) est pourvu qui est en parallèle audit deuxième axe (D), un élément de commande (7) étant articulé audit autre axe (A) et relié audit point d'articulation entraîné (B), et que ledit autre axe (A) est réglablement relié au dispositif par un élément de couplage (18).

4. Système orienteur pour l'orientation d'un dispositif ou instrument (1) selon un objet parcourant une orbite arquée, par exemple pour l'orientation d'un dispositif solaire, le mouvement du dispositif se faisant autour de deux axes (2, 3) et le mouvement autour du deuxième axe (3) étant inévitablement couplé au mouvement autour du premier axe (2) par au moins un élément de guidage (5) ayant un point d'articulation (B) entraîné, et ledit élément de guidage (5) pivotant autour d'un point d'articulation (C) qui n'est pas entraîné relativement au mouvement principal et qui se trouve hors dudit premier axe (2) du dispositif, caractérisé en ce que lesdits axes (2, 3) se coupent, et que la position dudit point d'articulation non entraîné (C) est réglable sur une orbite arquée se trouvant dans le plan dudit premier axe, et qu'après une rotation autour de l'axe vertical de 90° hors de la position centrale, l'angle entre la ligne de jonction entre le point d'intersection des axes (A) et ledit point d'articulation entraîné (B), d'une part, et l'horizontale, d'autre part, est 50° à 80° environ.

5. Système orienteur selon la revendication 1 ou 2, caractérisé en ce que ledit point d'articulation entraîné (B) dudit élément de guidage est relié au dispositif (A) à orienter moyennant deux éléments (7, 8) d'un mécanisme de commande, la longueur dudit élément (B) étant réglable.

6. Système orienteur selon la revendication 5, caractérisé en ce que ledit élément (B) à longueur réglable est un segment annulaire serrable.

7. Système orienteur selon l'une quelconque des revendications précédentes, caractérisé en ce que ledit point d'articulation non entraîné (C) est disposé sur une bielle (27) réglable en correspondance avec une position inclinée désirée du dispositif (1) à orienter.

8. Système orienteur selon l'une quelconque des revendications précédentes, caractérisé en ce que ledit élément de guidage (5) est réalisé sous forme d'un câble ou d'une chaîne.

9. Système orienteur selon l'une quelconque des revendications précédentes, caractérisé en ce que le mouvement autour dudit premier axe (2) se fait par un joint universel (21).

10. Système orienteur selon l'une quelconque des revendications précédentes, caractérisé en ce que ledit premier axe (2) du dispositif (1) comprend des câbles, chaînes ou des éléments de couplage rigides afin de permettre une opération en parallèle à d'autres dispositifs.

Fig. 1

Fig.2

Fig. 3

Fig. 4

Fig. 5

Fig. 6

Fig. 7

Fig. 8

Fig. 9

Fig.10

Fig. 11

Fig. 12

Fig.13

Fig.14